# EUROPEAN PATENT SPECIFICATION

(11) **EP 3 220 124 B1**
(45) Date of publication and mention of the grant of the patent: **12.02.2020**
(21) Application number: 16205605.5
(22) Date of filing: 21.12.2016
(51) Int. Cl.: G01N 1/22, G01N 15/06, G01N 21/53, G08B 17/107, G08B 21/12

(54) **PARTICLE SENSOR, AND ELECTRONIC DEVICE PROVIDED WITH SAME**
PARTIKELSENSOR UND ELEKTRONISCHE VORRICHTUNG DAMIT
CAPTEUR DE PARTICULES ET DISPOSITIF ÉLECTRONIQUE EN ÉTANT DOTÉ

(30) Priority: 15.03.2016 JP 2016051686
(43) Date of publication of application: 20.09.2017
(73) Proprietor: Omron Corporation, Kyoto 600-8530 (JP)
(72) Inventor: Kawai, Hajime, Kyoto-shi, Kyoto 600-8530 (JP); Miyamoto, Hiroyuki, Kyoto-shi, Kyoto 600-8530 (JP)
(74) Representative: Kilian Kilian & Partner

(56) References cited:
- JP-A- 2015 200 547
- US-A- 5 247 188
- US-A1- 2007 139 649
- US-A1- 2011 277 679

## Description

### FIELD

The present invention relates to a particle sensor, and an electronic device equipped with the particle sensor.

### BACKGROUND

Recently, it is not usual to find an optical sensor serving as a particulate sensor for detecting particles. This kind of particulate sensor comes equipped with a light emitting element and a light receiving element, and is configured measure the particles contained in a gas drawn into the sensor. The light emitting element irradiates the aforementioned gas with light, and the light receiving element receives the resulting diffuse radiation. The diffuse radiation makes it possible to detect the presence of particles in the gas. For instance, the dust, pollen, and fumes floating in the atmosphere are thus detectable. This kind of particulate sensor is known in the related art from, for example Japanese Unexamined Publication Nos.: 2005-283152, 2000-235000, and 2015-200629.

Japanese Unexamined Patent Publication No. 2005-283152 (published 13 October 2005) discloses a pollen sensor equipped with a light emitting means, a first light receiving means, and a second light receiving means. The light emitting means irradiates air which contains the particulates, with light having a predetermined polarization. The first light receiving means detects the diffuse radiation due to the particulates, and measures the intensity I of the diffuse radiation. The second light receiving means detects light dispersed by the particulates and traveling orthogonal to the polarization of the illumination light; here, the second light receiving means measures the intensity IS of this orthogonally-dispersed light. The pollen sensor in Japanese Unexamined Patent Publication No. 2005-283152 distinguishes between pollen and dust on the basis of the intensity I of the diffused light, and the intensity IS of the orthogonally-dispersed light.

The light-scattering particle-detection sensor disclosed in Japanese Unexamined Patent Publication No. 2000-235000 (published 29 August 2000) contains a light trap that attenuates stray light. In one embodiment described in Japanese Unexamined Patent Publication No. 2000-235000, the light receiving element and the light projecting element are housed in a case. A roughly conical tube projects from the outer peripheral edges of the entry point to the case, with the diameter of the opening of the tube growing larger toward the tip end. The structure decreases the likelihood that a vortex develops inside the case, and decreases the likelihood that dust will accumulate inside the case.

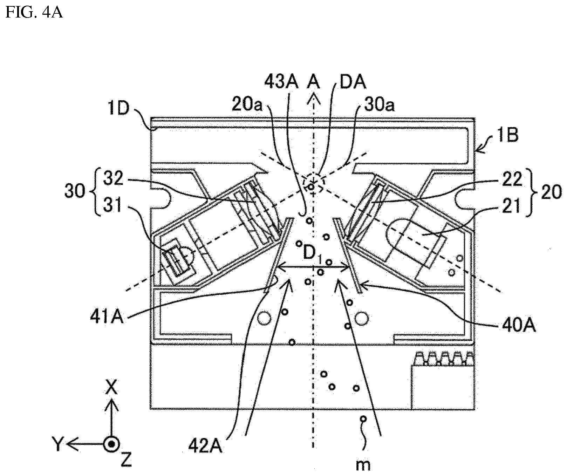

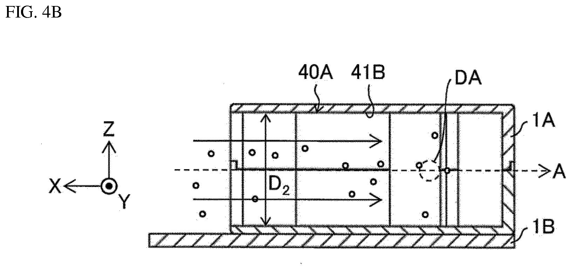

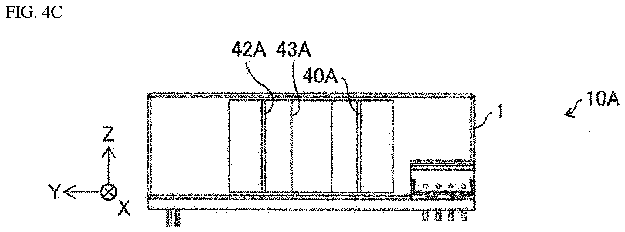

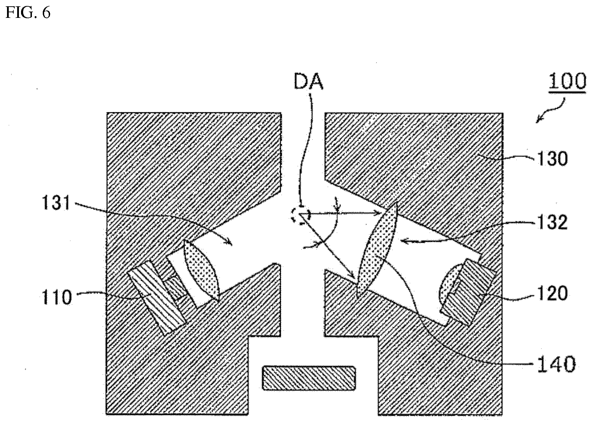

FIG. 6 is a cross-sectional view of the particle sensor disclosed in Japanese Unexamined Patent Publication No. 2015-200629 (published 12 November 2015). As can be seen in FIG. 6, the particle detection sensor disclosed in Japanese Unexamined Publication No. 2015-200629 is a photoelectric sensor provided with a light projecting element 110 and a light receiving element 120 inside an enclosure 130. The light projecting element 110 emits light that is scattered by particles located in a detection area DA; the light receiving element 120 receives scattered light, and hereby the particle detection sensor 100 detects the particles contained in a gas. The enclosure 130 is also provided with a light projecting space 131 into which light is projected by the light projecting element 110, and light receiving area 132. The light receiving area 132 is configured to guide the scattered light to the light receiving element 120. The scattered light is generated due to light from the light projecting element 110 striking particles in the detection area DA. A light receiving lens 140 (a condenser) is provided in the light receiving area. Note that the region where the light projecting region 131 and the light receiving region 132 overlap forms the detection area DA, which is the central area of measurement; more specifically, the optical axis of the light receiving element 110 and the optical axis of the light receiving element 120 intersect in the detection area DA. Further prior art documents are US 2011/277679 A1, US 2007/139649 A1, JP 2015 200547 A and US 5 247 188 A. US 2007/139649 A1 discloses in figure 4, that a light emitting element and a light receiver are on a vertical straight, which is perpendicular to an outlet opening or more exact the output of a flow path. Due to that arrangement of these both components, the light emitting element and the light receiver are not aligned along the extending direction of the exhaust path.

### Technical Problem

However, the above described existing technologies, especially in Japanese Unexamined Patent Publication No. 2015-200629 suffer from being unable to effectively concentrate particles in the detection area, which is the measurement center.

As illustrated in FIG. 6, the space near the detection area DA is widened in the enclosure 130 so that the particles entering the enclosure are unobstructed when flowing to the detection area DA which serves as the measurement center. Thus, the particles tend not to collect in the detection area DA. In addition, and more specifically, measurement errors increase when attempting to detect particles in a gas with comparatively fewer particulates, because the particles tend not to accumulate in the detection area DA.

The present invention was brought about to address the foregoing defects, and in particular aims to provide a particle sensor capable of effectively accumulating particles in a detection area serving as the measurement center of a sensor. An embodiment of the present invention also provides an electronic device equipped with said particle sensor.

### SUMMARY

In view of the foregoing issues, embodiments of the invention are directed to a particle sensor according to claim 1.

The configuration ensures that the plurality of particles entering from the inlet reach the detection area after being effectively concentrated by passing through the guide path, because the cross-sectional perimeter in a direction perpendicular to the extending direction of the guide path gradually becomes smaller from an inlet to the guide path toward the detection area. Consequently, providing the guide path in the aforementioned configuration does not impede the flow of the particles, and effectively guides the particles to the detection area DA which serves as the measurement center.

Accordingly, the configuration achieves a particle sensor capable of effectively concentrating particles in a detection area serving as the measurement center of the sensor.

The particle sensor can be a smaller size because the guide path configured to guide the gas to the detection area is inside the enclosure.

The particle sensor according to embodiment of the invention may also include an airflow generating device configured to guide the gas into the particle sensor. Hereby, the particle sensor is able to generate a flow of gas around the particle sensor, allowing gas to travel into the particle sensor.

The airflow generating device in a particle sensor according to the embodiments may be a heating apparatus provided near the entry point.

When the guide path extends vertically upward in the above mentioned configuration, the heating apparatus heats the gas entering the guide path through the entry point, facilitating intake of the gas into the guide path for measurement.

The airflow generating device in a particle sensor according to the embodiments may be an intake fan provided near the entry point. The aforementioned airflow generating device may also be an exhaust fan provided at the exit point to expel the gas.

Preferably, the optical axes of the light emitting element and the light receiving element are oriented toward the exit point for expelling the gas in the particle sensor according to embodiments of the invention.

The configuration allows the particle sensor to be a smaller size in the direction along the guide path because the optical axes of the light emitting element and the light receiving element are oriented toward the exit point.

The particle sensor according to embodiments of the invention may also be configured so that the guide path extends parallel to a plane containing the optical axes of both the light emitting element and the light receiving element.

Hereby, the particle sensor may be reduced in size along its thickness direction, to achieve a smaller particle sensor.

The particle sensor according to the invention further includes an exhaust path inside the enclosure located opposite the guide path in relation to the detection area and configured to expel the gas passed through the detection area; wherein the exhaust path extends in a direction perpendicular to the extending direction of the guide path, and an exit point from which gas is expelled is formed at the end of the exhaust path.

According to this configuration, the exhaust path extends in a direction perpendicular to the extending direction of the guide path, and an exit point from which gas is expelled is formed at the end of the exhaust path. The exhaust path is not provided along the extending direction of the guide path. Hereby, the particle sensor may be reduced in size along the direction of the guide path, to achieve a smaller particle sensor.

The light emitting element and the light receiving element in the particle sensor according to the invention are arranged along the extending direction of the exhaust path. The exit point is formed at the end of the exhaust path opposite the light emitting element.

Therefore, even if external light enters the enclosure from the exit point, the light is prevented from entering the light receiving element.

In the particle sensor according to embodiments of the invention, the guide path may be a truncated cone, configured so that the inner diameter thereof grows smaller from the inlet to the guide path toward the detection area. Hereby, particles are more effectively concentrated in the detection area serving as the measurement center of the sensor.

In the particle sensor according embodiments of the invention, the guide path may be a truncated pyramid configured from at least one set of opposing inner wall surfaces such that the distance between the set of inner wall surfaces grows smaller from the inlet to the guide path toward the detection area. Hereby, particles are more effectively concentrated in the detection area serving as the measurement center of the sensor.

The inner wall surfaces of the guide path may be curved in the particle sensor according to embodiments of the invention.

The inner wall surfaces of the guide path may be tapered in the particle sensor according to embodiments of the invention.

To address the forgoing issues, an electronic device according to claim 12 is provided.

Accordingly, the above mentioned configurations achieve an electronic device capable of effectively concentrating particles in a detection area serving as the measurement center of the sensor.

### Effects

Embodiments of the invention are capable of effectively concentrating particles in a detection area serving as the measurement center of a sensor.

### BRIEF DESCRIPTION OF THE DRAWINGS

FIGS. 1A, 1B, and 1C illustrate a configuration of a particle sensor according to a first embodiment of the invention; FIG. 1A is a perspective view; FIG. 1B is an exploded perspective view; and FIG. 1C is a bottom view from the X direction;
FIGS. 2A and 2B depict inside the particle sensor according to a first embodiment of the invention; FIG. 2A is a perspective view; and FIG. 2B is a front view from the Z direction;
FIGS. 3A and 3B are views for describing the operation of the particle sensor according to the first embodiment; FIG. 3A is a front view depicting the internal configuration from the Z direction; and FIG. 3B is a cross-sectional view of the X-Z plane;
FIGS. 4A, 4B, and 4C illustrate a configuration of a particle sensor according to a second embodiment of the invention; FIG. 4A is a front view depicting the internal configuration from the Z direction; FIG. 4B is a cross-sectional view of the X-Z plane; and FIG. 4C is a bottom view from the X direction;
FIG. 5 is a front view depicting the internal configuration of a particle sensor according to a third embodiment of the invention from the Z direction; and
FIG. 6 is a cross-sectional view of the particle sensor disclosed in Japanese Unexamined Patent Publication No. 2015-200629.

### DETAILED DESCRIPTION

### First Embodiment

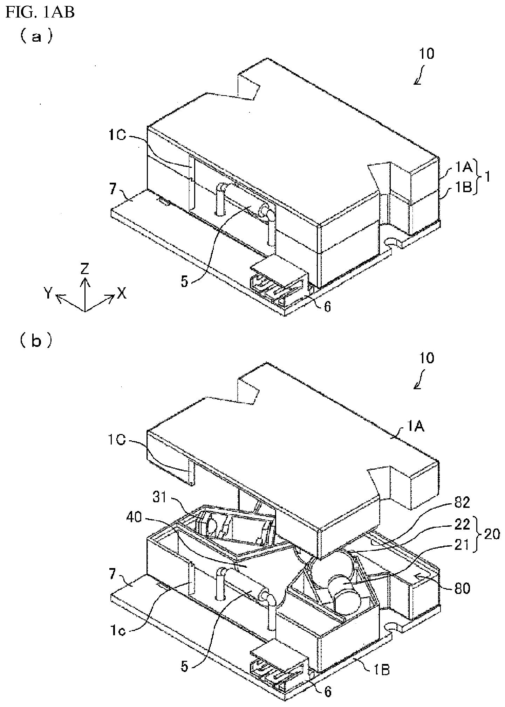

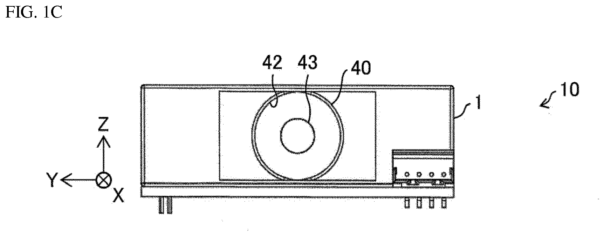

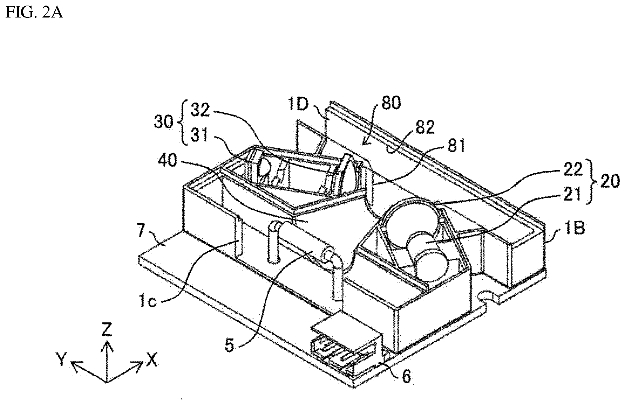

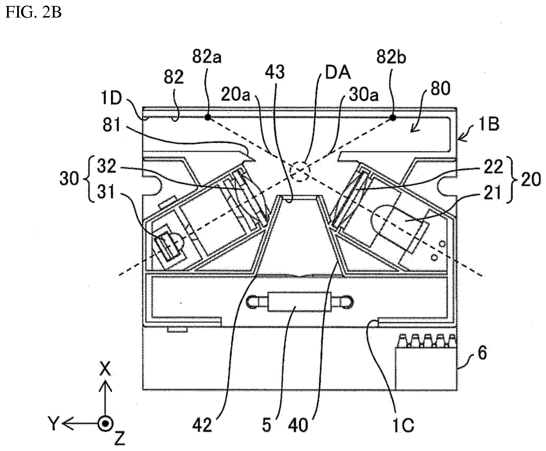

The configuration of a particle sensor according to embodiments of the invention is described in detail below on the basis of FIG. 1A to FIG. 1C, and FIGS. 2A and 2B. FIGS. 1A, 1B, and 1C illustrate a configuration of a particle sensor 10 according to a first embodiment of the invention. FIG. 1A is a perspective view; FIG. 1B is an exploded perspective view; and FIG. 1C is a bottom view from the X direction; FIGS. 2A and 2B depict inside the particle sensor 10 according to the first embodiment. FIG. 2A is a perspective view; and FIG. 2B is a front view from the Z direction;

A particle sensor 10 according the embodiment is provided with an enclosure 1 made up of a cover 1A and a case 1B, a light emitting unit 20, a light receiving unit 30, a heater 5 (heating apparatus), a connector 6, and a printed circuit board 7.

The light emitting unit 20 radiates light onto a gas containing particles that is introduced into the detection area DA. The light emitting unit 20 emits light that is scattered by the particles located in the detection area DA; the light receiving unit 30 receives the scattered light, and hereby the particle sensor 10 detects the particles contained in a gas.

The light emitting unit 20, light receiving unit 30, and heater 5 are housed in the case 1B. The cover 1A is a lid for closing the case 1B. The enclosure 1 made up of the cover 1A and the case 1B is mounted to the printed circuit board 7. The printed circuit board 7 includes the circuitry that electrically connects the light emitting unit 20, light receiving unit 30, and heater 5 and the like, which are housed in the enclosure 1. A connector 6 is also mounted to the printed circuit board 7 to provide an electrical connection to an external device.

The enclosure 1 includes an entry point 1C and an exit point 1D. A detection area DA is also provided inside the enclosure 1; the particles contained in the gas flowing from the entry point 1C are detected in the detection area DA. The particle sensor 10 is configured to detect the particles in a gas flowing from the entry point 1C and passing through the detection area DA. The enclosure 1 is provided with a guide path 40 that guides the gas flowing from the entry point 1C toward the detection area DA.

Here, the X direction runs from the entry point 1C toward the detection area DA, and the Z direction runs along a normal line from the printed circuit board 7. The direction orthogonal to both the X and Z directions is taken as the Y direction. The direction along which the guide path 40 extends can also be considered the X direction.

In the particle sensor 10 according to the embodiment, the Z direction corresponds to front to back, and the heater 5 is arranged near the bottom. Thus, in this description the end near where the heater 5 is arranged in the particle sensor 10 is toward the bottom, and the opposite direction is toward the top. Additionally, near the cover 1A in the particle sensor 10 is taken as toward the front (front side), and the opposite direction taken as toward the back (rear side).

The light emitting unit 20 includes a light emitting element 21 and a lens 22 arranged at the light emission side of the optical system. The light emitting element 21 is equivalent to a light source that emits light of a predetermined wavelength toward the detection area DA. For instance, the light emitting element 21 may be a solid-state light emitting device such as an LED, or a semiconductor laser. The lens 22 is arranged closer to the detection area DA relative to the light emitting element 21, and is configured to forward light emitted from the light emitting element 21 toward the detection area DA. The light emitted from the light emitting element 21 reaches the detection area DA via the lens 22. Note that the materials composing the lens 22 are not particularly limited, and may be, for example, a transparent resin, or glass.

The lens 22 may be a collimating lens that collimates light emitted from the light emitting element 21 toward the detection area DA, or may be a condenser that focuses light emitted from the light emitting element 21 toward the detection area DA; the lens 22 may also be a combination of a collimating lens and a condenser.

The light receiving unit 30 is provided with a light receiving element 31 and a lens 32 arranged at the light receiving side of the optical system. The light receiving element 31 is a device capable of receiving light; for instance, this device may be a photodiode, a photo IC diode, a phototransistor, or a device that converts optical signals into electrical signals such as a photomultiplier tube or the like. The lens 32 is arranged closer to the detection area DA in the light receiving element 31, with the optical axis thereof coinciding with the optical axis of the light receiving element 31.

Detecting particles inside the sensor requires passing a particle-containing gas through the particle sensor 10. However, it tends to be difficult to flow the particle-containing gas inside the particle sensor 10 by merely providing a guide path 40 inside the particle sensor 10. Therefore, for gas to travel along the guide path 40 inside the particle sensor 10, the particle sensor 10 itself must either: (i) be arranged in the gas flow path inside an electronic device such as an air cleaner or an air conditioner to force the gas into the particle sensor 10; or, (ii) be provided with an airflow generating device that creates airflow so that the gas passes through the particle sensor 10.

The particle sensor 10 according to the embodiment adopts the above-mentioned strategy (ii). The heater 5 heats the air and thereby generates airflow; therefore the heater 5 serves as the airflow generating device in the embodiment.

As illustrated in FIG. 1A and 1B, the heater 5 is provided in the particle sensor 10 near the entry point 1C of the enclosure 1. More specifically, the heater 5 is arranged vertically below the guide path 40 between the entry point 1C and the inlet 42 to the guide path 40. Heat radiating from the heater 5 creates an upward flow of air (rising airflow). In this manner, the gas near the entry point 1C of the enclosure 1 is heated by the heater 5, whereby the gas for measurement is easily drawn into the guide path 40.

Note that, instead of a heater 5 the particle sensor 10 may be equipped with a fan that serves as the airflow generating device. When using a fan, the aforementioned airflow generating device may be an intake fan provided at the entry point. The airflow generating device may also be an exhaust fan provided at the exit point 1D to expel the gas.

The particle sensor 10 may also be arranged along the gas flow path inside an electronic device such as an air cleaner or an air conditioner, or the like as above described at (i). When arranged along the gas flow path inside an electronic device, the particle sensor 10 does not need a heater 5 to serve as the airflow generating device, thereby reducing the number of parts.

The light emitting element 21 and the light receiving element 31 are arranged in the enclosure 1 so that the respective optical axes 20a and 30a intersect. The optical axis 20a of the light emitting element 21 and the optical axis 30a of the light receiving element 31 are mirror images of each other about the guide path 40. In other words, the angle formed between the optical axis 20a and an axis through the guide path 40 is identical to the angle formed between the optical axis 30a and the axis through the guide path 40. Hereby, the light receiving element 31 receives the light scattering from the particles efficiently without being affected by light directly from the light emitting element 21, thus preventing degradation of the detection accuracy.

In addition, the detection of the articles included in the gas that will be measured takes place in the detection area DA. As illustrated in FIG. 2B, the detection area DA is established further upward from the outlet 43 of the guide path 40, and is where the light emitting area of the light emitting unit 20 and the light receiving area of the light receiving unit 30 overlap. More specifically, the detection area DA includes an intersection point where the optical axis 20a of the light emitting element 21 intersects with the optical axis 30a of the light receiving element 31. The particle containing gas that is the measurement object travels through the guide path 40 and is guided to the detection area DA.

The enclosure 1 includes the entry point 1C for introducing air to the guide path 40, and an exit point 1D for exhausting the air from the guide path 40. An exhaust path 80 is also provided in the enclosure 1 above the guide path 40 to serve as an outlet at the exit point 1D. The exhaust path 80 extends in the Y direction above the light emitting unit 20 and the light receiving unit 30 and connects to the detection area DA. A gas flowing into the entry point 1C passes through the detection area DA via the guide path 40 and arrives at the exhaust path 80. The gas passes through the exhaust path 80 and is expelled from the exit point 1D. The aperture area of the entry point 1C is larger than the aperture area of the exit point 1D in the particle sensor 10, to efficiently guide the particle-containing gas into the enclosure 1 and to expel the gas.

An opening 81 is created in the exhaust path 80, connecting the exhaust path 80 to the detection area DA. The opening 81 is located above the outlet of the guide path 40. The opening 81 is designed so that at least the optical axis 20a of the light emitting element 21 passes therethrough. Additionally, the detection area DA is established between the opening 81 and the guide path 40. An inner wall 82 is formed in the enclosure 1 so that at least a section 82b thereof intersects with the optical axis 30a of the light receiving element 31. That is, no openings are formed in the inner wall 82 of the exhaust path 80 at the section 82b where the inner wall 82 intersects with the optical axis 30a of the light receiving element 31. This prevents any external light from impinging directly on the light receiving element 31.

The inner wall 82 is also provided in the enclosure 1 so that at least a section 82b thereof intersects with the optical axis 20a of the light emitting element 21. Hereby, the light emitted from the light emitting element 21 that passes through the detection area DA in the particle sensor 10 without striking any particles in the detection area DA passes through the opening 81, reflects from the inner wall 82 of the exhaust path 80, and exits from the exit point 1D. Accordingly, this prevents light emitted from the light emitting element 21 and passing through the detection area DA without striking a particle therein from reflecting or scattering in the enclosure 1 and being received at the light receiving element 31; the configuration thus minimizes the generation of stray light inside the enclosure 1.

The exit point 1D is provided opposite the light emitting element 21 (i.e., near the light receiving element 31) on the exhaust path 80. When the exit point 1D is provided opposite the light receiving element 31 (i.e., near the light emitting element 21) on the exhaust path 80, light from outside the exit point 1D may enter the light receiving element 31. The configuration of the particle sensor 10 is such that, because the exit point 1D is arranged opposite the light emitting element 21 instead of opposite the light receiving element 31 on the exhaust path 80, it is possible to prevent external light from entering and being received at the light receiving element 31.

The optical axis 20a of the light emitting element 21 and the optical axis 30a of the light receiving element 31 are oriented upward (i.e. oriented toward the exit point 1D). The advantage, is that this kind of configuration allows for a thinner vertical profile. However, adopting this kind of configuration does require that each of the elements is oriented toward the exit point 1D. This creates a problem where stray light tends to pass through the exit point 1D to enter the particle sensor 10 and reach the light receiving element 31. Therefore, the exit point 1D is not an extension of the guide path 40 in the particle sensor 10. Instead, the flow path in the particle sensor 10 according to the embodiment curves along the Y direction to obstruct the stray light entering the sensor, and to deter the stray light from reaching the light receiving element 31, even if stray light does enter the sensor.

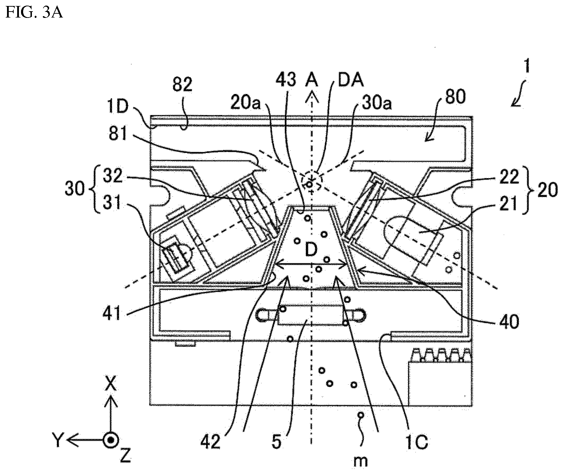

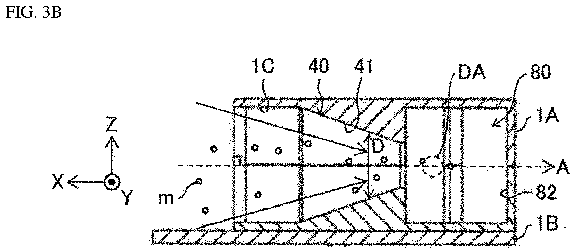

Next, operations of the particle sensor 10 according to the embodiment are described on the basis of FIGS. 3A and 3B. FIG. 3A and 3B are views for describing the operation of the particle sensor 10. FIG. 3A is a front view depicting the internal configuration from the Z direction, and FIG. 3B is a cross-sectional view. Note that FIG. 3A shows the device without the cover 1A.

When the heater 5 is operating, airflow is generated within the guide path 40 and a gas containing the particles m is drawn into the enclosure 1 via the entry point 1C. This gas enters the guide path 40 at the inlet 42 and travels along the direction A; the gas travels through the guide path 40 and is guided from the outlet 43 to the detection area DA.

At this point, if no particles m are present in the gas drawn into the enclosure 1 (i.e., no particles m flowed into the detection area DA), light emitted from the light emitting element 21 passes through the detection area DA and continue on as is; therefore the light is not scattered due to the particles. Consequently, the light receiving element 31 does not receive any scattered light. Accordingly, it may be determined that no particles m are present in the gas introduced to the particle sensor 10.

Note that in this case light passing through the detection area DA and traveling straight on may reflect inside the enclosure 1, becoming stray light and entering the light receiving element 31. As above described, the opening 81 of the exhaust path 80 is designed so that the optical axis 20a of the light emitting element 21 passes therethrough, and the particle sensor 10 is provided with an inner wall 82 having a section that intersects with the optical axis 20a of the light emitting element 21. Therefore, the light passing through the detection area DA and traveling straight on passes through the opening 81. The light then reflects at the inner wall 82 of the exhaust path 80, and exits from the exit point 1D without entering the light receiving element 31. Hereby, the light passing through the detection area DA and traveling straight on is prevented from reflecting inside the enclosure 1 to become stray light and enter the light receiving element 31. The inner wall 82 may also be coated with the material that prevents optical reflection. This further reduces the amount of stray light.

When particles m are present in the gas drawn into the enclosure 1 (i.e., particles m flow into the detection area DA), light emitted from the light emitting element 21 strikes the particles m in the detection area DA and is scattered. Light scattered by the particles m is focused by the lens 32 on the light receiving side, and enters the light receiving element 31. The presence of the particles m in the gas introduced to the particle sensor 10 may be determined on the basis of the output signal produced from the light entering the light receiving element 31.

Thus, the presence of particles m (whether there are particles m) in the gas introduced to the particle sensor 10 can be detected based on the light scattering from the particles m. The size of the particles m may also be determined based on the size of the output signal produced by the light received at the light receiving element 31. The number (quantity) of particles m in the gas introduced to the particle sensor 10 may be determined on the basis of a peak value in the output signal produced from the light entering the light receiving element 31.

At this point, in a specific embodiment of the particle sensor 10 the guide path 40 is configured such that an interlinear distance D₁ gradually lessens from the inlet 42 to the guide path 40 toward the detection area DA; where the interlinear distance D₁ represents the inner wall surface in the cross section along the extending direction of the guide path 40. More specifically, the cross-sectional perimeter perpendicular to the extending direction of the guide path 40 lessens gradually from the inlet 42 to the guide path 40 toward the detection area DA.

For instance, the guide path 40 and the particle sensor 10 according to the embodiment and illustrated in FIG. 3A is a truncated cone (conical cylinder); here, the guide path 40 possesses an inner wall surface 41 that tapers such that the inner diameter grows smaller from the inlet to the guide path 40 toward the detection area DA. This tapering means that if the guide path 40 were cut along a plane parallel to its axial direction, the lines that appear on the cut section of the inner wall of the guide path 40 are not parallel to each other.

Thus, the inner wall surface 41 of the guide path 40 can be tapered so that the inner diameter of the guide path 40 grows smaller toward the detection area DA. This allows the plurality of particles m contained in the gas flowing in through the entry point 1C to be caught up in the air flow inside the guide path 40, and increase in density while traveling from the inlet 42 to the outlet 43. Therefore, the plurality of particles m flowing in from the entry point 1C are able to reach the detection area DA after being effectively concentrated by passing through the guide path 40. Consequently, providing the guide path 40 in this configuration of the particle sensor 10 does not impede the flow of the particles m, and effectively guides the particles m to the detection area DA which serves as the measurement center. More specifically, it is possible to reduce measurement errors even in cases where there is a relatively small quantity of particles m, because the particles m are effectively guided to the detection area DA.

The guide path 40 is configured to extend from the entry point 1C along a direction A. The gas flows in the direction A when entering the enclosure 1 from the entry point 1C. The opening direction of the entry point 1C and the extending direction of the guide path 40 coincide with the direction A. In contrast, the opening direction of the exit point 1D intersects with the opening direction of the entry point 1C and the extending direction of the guide path 40 (i.e., the direction A). More specifically, the opening direction of the exit point 1D is perpendicular to the direction A.

In other words, the particle sensor 10 is provided with an exhaust path 80 inside the enclosure 1 opposite the guide path 40 via the detection area DA. The exhaust path 80 is for expelling the gas that passed through the guide path 40 to outside the sensor. The exhaust path 80 extends in a direction perpendicular to the extending direction of the guide path 40, i.e., the direction A; and an exit point is formed at the end of the exhaust path 80.

Therefore, the exhaust path 80 extends in a direction intersecting with the extending direction A of the guide path 40, while the exit point 1D is not provided in the extending direction A of the guide path 40. Given this configuration, the vertical profile of the particle sensor 10 (i.e., the dimension along the X direction) can be reduced, thereby reducing the size of the device.

The light emitting element 21 and the light receiving element 31 are aligned along the extending direction of the exhaust path 80; and the exit point 1D is formed at the end of the exhaust path 80 opposite the light emitting element 21. Therefore, even if external light enters the enclosure 1 from the exit point 1D, that light is prevented from entering the light receiving element 31.

### Second Embodiment

Another embodiment is described below based on FIGS. 4A through 4C. For the sake of convenience, components that have an identical function in a previously described embodiment are given the same reference numerals, and an explanation thereof is omitted.

FIGS. 4A, 4B, and 4C illustrate a configuration of a particle sensor 10A according to the embodiment. FIG. 4A is a front view depicting the internal configuration from the Z direction; FIG. 4B is a cross-sectional view of the X-Z plane; and FIG. 4C is a bottom view from the X direction.

In the first embodiment, the guide path 40 in the particle sensor 10 is a truncated cone where the inner wall surface 41 tapers such that the inner diameter grows smaller toward the detection area DA. However, as long as the inner wall surface of the guide path is configured so that the gap between the opposing inner wall surfaces gradually becomes smaller toward the detection area, the configuration in the particle sensor is not particular limited to the first embodiment.

As illustrated in FIGS. 4A to 4C, the particle sensor 10A according to the embodiment differs from the first embodiment in that the guide path 40A is not a truncated cone. As can be seen in FIGS. 4A and 4B, the guide path 40A in the particle sensor 10A is a truncated pyramid (geometrical pyramid) composed of one set of opposing inner wall surfaces 41A and another set of opposing inner wall surfaces 41B.

The opposing inner wall surfaces 41A are the tapered surfaces among the four inner wall surfaces making up the truncated pyramid of the guide path 40A. The distance D₁ between the opposing inner wall surfaces 41A gradually becomes smaller from the inlet of the guide path 40A to the detection area DA. Whereas, the distance D₂ between the opposing inner wall surfaces 41B remain unchanged from the inlet of the guide path 40A to the detection area DA. The inner wall surfaces 41B may be used as is, as the inner wall surfaces of the cover 1A and case 1B in the particle sensor 10A of this embodiment.

The plurality of particles m flowing in from the entry point 1C enter the inlet 42A of the guide path 40A, advance along the direction A and are guided to the detection area DA from the outlet 43 via the guide path 40A. The guide path 40A tapers so that the distance D₁ between one set of opposing inner wall surfaces 41A gradually becomes smaller from the inlet of the guide path 40A to the detection area DA; therefore, by traveling through the guide path 40A, the particles reach the detection area DA in an effectively concentrated state. Consequently, providing the guide path 40A in this configuration of the particle sensor 10A does not impede the flow of the particles m, and effectively guides the particles m to the detection area DA which serves as the measurement center.

Furthermore, a particle sensor 10A according to the embodiment is relatively easy to construct at lower cost compared to the particle sensor of the first embodiment.

### Third Embodiment

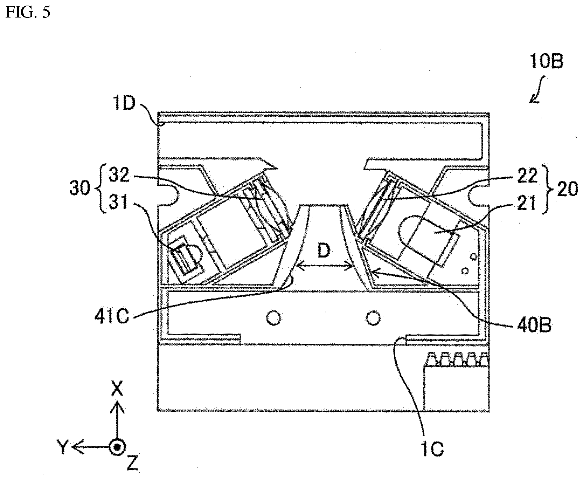

Yet another embodiment can be described below based on FIG. 5. For the sake of convenience, components that have an identical function in a previously described embodiment are given the same reference numerals, and an explanation thereof is omitted.

FIG. 5 is a front view depicting the internal configuration of a particle sensor according to a third embodiment from the Z direction. As illustrated in FIG. 5, the particle sensor 10B according to the embodiment, differs from the first and second embodiments, in that the inner wall surfaces 41B of the guide path 40B are curved.

In the particle sensor 10B, the distance D between the opposing inner wall surfaces 41C in the guide path 40B gradually becomes smaller from the inlet of the guide path 40B to the detection area DA. The inner wall surfaces 41C are curved.

Providing the guide path 40B in this kind of configuration of the particle sensor 10B does not impede the flow of the particles m, and effectively guides the particles m to the detection area DA which serves as the measurement center.

### Incorporating the Particle Sensor in an Electronic Device

A particle sensor according to embodiments of the invention is not particularly limited by the type electronic device; the particle sensor may be installed so long as electronic device includes an output unit capable of outputting the result from the particle sensor detecting the presence or density of particles. A particle sensor according to the embodiments may be incorporated in an electronic device such as a dust sensor, a smoke detector, an air cleaner, a ventilator, or an air conditioner. The aforementioned output may be an alert via sound or light, or may be presented on a display to notify a user of the result of detecting the presence or density of particles output from the particle sensor.

Alternatively, the output unit in an electronic device according to the embodiments, may provide the detection of particles or density of particles as output to a controller in the electronic device. Hereby, the results of detection by the particle sensor may be used in the device. For instance, the electronic device may be an air cleaner. In this case, the output unit may output the results from the particle detector detecting the presence or density of particles to a controller in the air cleaner. The controller may control the device by starting, stopping, or adjusting the operation level of the air cleaner depending on the output received.

## Claims

1. A particle sensor (10) comprising:
an enclosure (1);
a light emitting element (21) configured to emit light toward a detection area (DA);
a light receiving element (31) configured to receive light emitted from the light emitting element (21) and scattered due to a particle in the detection area (DA); wherein
the light emitting element (21) and the light receiving element (31) are provided inside the enclosure (1);
the particle sensor (10) being configured to detect particles contained in a gas flowing through an entry point (1C) in the enclosure (1); wherein the enclosure (1) includes therein a guide path (40) configured to guide the gas to the detection area (DA); and
the cross-sectional perimeter in a direction perpendicular to the extending direction of the guide path (40) gradually becomes smaller from an inlet (42) to the guide path (40) toward the detection area (DA); the particle sensor further comprising
an exhaust path (80) inside the enclosure (1) located opposite to the guide path (40) in relation to the detection area (DA) and configured to expel the gas that passed through the detection area (DA); wherein
the exhaust path (80) extends in a direction perpendicular to the extending direction of the guide path (40), and an exit point (1D) where from gas is expelled is formed at the end of the exhaust path (80);
the light emitting element (21) and the light receiving element (31) being aligned along the extending direction of the exhaust path (80); and
the exit point (1D) being provided on the exhaust path (80) at the end of the exhaust path (80) opposite the light emitting element (21).

2. The particle sensor (10) according to claim 1, further comprising: an airflow generating device configured to guide the gas into the particle sensor (10).

3. The particle sensor (10) according to claim 2, wherein the airflow generating device is a heating apparatus (5) provided near the entry point (1C).

4. The particle sensor (10) according to claim 2, wherein the airflow generating device is an intake fan provided near the entry point (1C).

5. The particle sensor (10) according to claim 2, wherein the airflow generating device is an exhaust fan provided near the exit point (1D) to expel the gas.

6. The particle sensor (10) according to any one of claims 1 through 5, wherein the optical axes (20a, 30a) of the light emitting element (21) and the light receiving element (31) are oriented toward the exit point (1D) for expelling the gas.

7. The particle sensor (10) according to any one of claims 1 through 6, wherein the guide path (40) extends parallel to a plane containing optical axes (20a, 30a) of both the light emitting element (21) and the light receiving element (31).

8. The particle sensor (10) according to any one of claims 1 through 7, wherein the guide path (40) is a truncated cone, configured so that the inner diameter thereof grows smaller from the inlet (42) to the guide path (40) to the detection area (DA).

9. The particle sensor (10) according to any one of claims 1 through 7, where in the guide path (40) is a truncated pyramid configured from at least one set of opposing inner wall surfaces (41) such that the distance between the set of inner wall surfaces (41) grows smaller from the inlet (42) to the guide path (40) toward the detection area (DA).

10. The particle sensor (10) according to any one of claims 1 through 9, wherein the inner wall surfaces (41) of the guide path (40) are curved.

11. The particle sensor (10) according to any one of claims 1 through 9, wherein the inner wall surfaces (41) of the guide path (40) are tapered.

12. An electronic device comprising: a particle sensor (10) according to any one of claims 1 to 11; and
an output unit configured to output the result from the particle sensor (10) detecting the presence or density of particles.

## Patentansprüche

1. Partikelsensor (10) umfassend:
ein Gehäuse (1);
ein lichtemittierendes Element (21), das dazu eingerichtet ist, Licht in Richtung einer Erfassungsfläche (DA) zu emittieren;
ein lichtempfangendes Element (31), das dazu eigerichtet ist, Licht zu empfangen, das von dem lichtemittierenden Element (21) emittiert wird und auf Grund eines Partikels in der Erfassungsfläche (DA) gestreut wurde; wobei
das lichtemittierende Element (21) und das lichtempfangende Element (31) innerhalb des Gehäuse (1) vorgesehen sind;
der Partikelsensor (10) dazu eingerichtet ist, Partikel zu erfassen, die in einem Gas enthalten sind, das durch einen Eintrittspunkt (1C) in das Gehäuse (1) einströmt;
wobei das Gehäuse (1) darin einen Führungspfad (40) umfasst, der dazu eingerichtet ist, das Gas zu der Erfassungsfläche (DA) zu führen; und
der Querschnittsumfang in einer Richtung senkrecht zur Erstreckungsrichtung des Führungspfads (40) allmählich kleiner wird von einem Einlass (42) zu dem Führungspfad (40) in Richtung der Erfassungsfläche (DA); wobei der Partikelsensor ferner umfasst
einen Ausströmungspfad (80) innerhalb des Gehäuses (1), der gegenüber dem Führungspfad (40) in Bezug auf die Erfassungsfläche (DA) angeordnet ist und dazu eingerichtet ist, das Gas auszustoßen, das durch die Erfassungsfläche (DA) durchgeströmt ist; wobei
der Ausströmungspfad (80) sich in eine Richtung senkrecht zu der Erstreckungsrichtung des Führungspfads (40) erstreckt, und ein Austrittspunkt (1D), an dem das Gas ausgestoßen wird, am Ende des Ausströmungspfads (80) gebildet ist;
das lichtemittierende Element (21) und das lichtempfangende Element (31) entlang der Erstreckungsrichtung des Ausströmungspfads (80) ausgerichtet sind; und
der Austrittspunkt (1D) an dem Ausströmungspfad (80) an dem Ende des Ausströmungspfads (80) gegenüber des lichtemittierenden Elements (21) vorgesehen ist.

2. Partikelsensor (10) nach Anspruch 1, ferner umfassend: ein Luftströmung erzeugendes Gerät, das dazu eingerichtet ist, das Gas in den Partikelsensor (10) zu führen.

3. Partikelsensor (10) nach Anspruch 2, wobei das Luftströmung erzeugende Gerät eine Heizungsvorrichtung (5) ist, die in der Nähe des Eintrittspunkts (1C) vorgesehen ist.

4. Partikelsensor (10) nach Anspruch 2, wobei das Luftströmung erzeugende Gerät ein Ansaugventilator ist, der in der Nähe des Eintrittspunkts (1C) vorgesehen ist.

5. Partikelsensor (10) nach Anspruch 2, wobei das Luftströmung erzeugende Gerät ein Abluftventilator ist, der in der Nähe des Austrittspunkts (1D) vorgesehen ist, um das Gas auszustoßen.

6. Partikelsensor (10) nach einem der Ansprüche 1 bis 5, wobei die optischen Achsen (20a, 30a) des lichtemittierenden Elements (21) und des lichtempfangenden Elements (31) in Richtung des Austrittspunkts (1D) orientiert sind, um das Gas auszustoßen.

7. Partikelsensor (10) nach einem der Ansprüche 1 bis 6, wobei der Führungspfad (40) sich parallel erstreckt zu einer Ebene, die die optischen Achsen (20a, 30a) von sowohl dem lichtemittierenden Element (21) als auch dem lichtempfangenden Element (31) umfasst.

8. Partikelsensor (10) nach einem der Ansprüche 1 bis 7, wobei der Führungspfad (40) ein Kegelstumpf ist, der so eingerichtet ist, dass der innere Durchmesser davon von dem Einlass (42) zu dem Führungspfad (40) zu der Erfassungsfläche (DA) abnimmt.

9. Partikelsensor (10) nach einem der Ansprüche 1 bis 7, wobei in dem Führungspfad (40) eine kegelstumpfartige Pyramide ist, die aus mindestens einem Satz von gegenüberliegenden Innenwandoberflächen (41) derart gebildet ist, dass der Abstand zwischen dem Satz von Innenwandoberflächen (41) von dem Einlass (42) zu dem Führungspfad (40) in Richtung der Erfassungsfläche (DA) abnimmt.

10. Partikelsensor (10) nach einem der Ansprüche 1 bis 9, wobei die Innerwandoberflächen (41) des Führungspfads (40) gekrümmt sind.

11. Partikelsensor (10) nach einem der Ansprüche 1 bis 9, wobei die Innerwandoberflächen (41) des Führungspfads (40) verjüngt sind.

12. Elektronisches Gerät umfassend: einen Partikelsensor (10) nach einem der Ansprüche 1 bis 11; und
eine Ausgabeeinheit, die dazu eingerichtet ist, das Ergebnis von dem Partikelsensor (10), der die Anwesenheit oder die Dichte von Partikeln erfasst, auszugeben.

## Revendications

1. Capteur de particules (10) comprenant :
une enceinte (1) ;
un élément luminescent (21) configuré pour émettre une lumière vers une zone de détection (DA) ;
un élément récepteur de lumière (31) configuré pour recevoir la lumière émise par l'élément luminescent (21) et dispersée en raison d'une particule dans la zone de détection (DA) ; dans lequel
l'élément luminescent (21) et l'élément récepteur de lumière (31) sont disposés à l'intérieur de l'enceinte (1) ;
le capteur de particules (10) étant configuré pour détecter des particules contenues dans un gaz circulant par l'intermédiaire d'un point d'entrée (1C) dans l'enceinte (1) ;
dans lequel l'enceinte (1) comprend dans celle-ci un trajet de guidage (40) configuré pour guider le gaz vers la zone de détection (DA) ; et
le périmètre en coupe transversale dans une direction perpendiculaire à la direction d'extension du trajet de guidage (40) devient progressivement plus petit depuis une entrée (42) vers le trajet de guidage (40) en direction de la zone de détection (DA) ; le capteur de particules comprenant en outre un trajet d'échappement (80) à l'intérieur de l'enceinte (1) situé à l'opposé du trajet de guidage (40) en relation avec la zone de détection (DA) et configuré pour expulser le gaz qui a traversé la zone de détection (DA) ; dans lequel
le trajet d'échappement (80) s'étend dans une direction perpendiculaire à la direction d'extension du trajet de guidage (40), et un point de sortie (1D) d'où le gaz est expulsé est formé à l'extrémité du trajet d'échappement (80) ;
l'élément luminescent (21) et l'élément récepteur de lumière (31) étant alignés le long de la direction d'extension du trajet d'échappement (80) ; et
le point de sortie (1D) étant disposé sur le trajet d'échappement (80) à l'extrémité du trajet d'échappement (80) opposée à l'élément luminescent (21).

2. Capteur de particules (10) selon la revendication 1, comprenant en outre : un dispositif générateur de courant d'air configuré pour guider le gaz dans le capteur de particules (10).

3. Capteur de particules (10) selon la revendication 2, dans lequel le dispositif générateur de courant d'air est un dispositif chauffant (5) disposé près du point d'entrée (1C).

4. Capteur de particules (10) selon la revendication 2, dans lequel le dispositif générateur de courant d'air est un ventilateur d'aspiration disposé près du point d'entrée (1C).

5. Capteur de particules (10) selon la revendication 2, dans lequel le dispositif générateur de courant d'air est un ventilateur d'extraction disposé près du point de sortie (1D) pour expulser le gaz.

6. Capteur de particules (10) selon l'une quelconque des revendications 1 à 5, dans lequel les axes optiques (20a, 30a) de l'élément luminescent (21) et de l'élément récepteur de lumière (31) sont orientés en direction du point de sortie (1D) pour expulser le gaz.

7. Capteur de particules (10) selon l'une quelconque des revendications 1 à 6, dans lequel le trajet de guidage (40) s'étend parallèlement à un plan contenant des axes optiques (20a, 30a) tant de l'élément luminescent (21) que de l'élément récepteur de lumière (31).

8. Capteur de particules (10) selon l'une quelconque des revendications 1 à 7, dans lequel le trajet de guidage (40) est un cône tronqué, configuré de façon que son diamètre intérieur se rétrécisse depuis l'entrée (42) du trajet de guidage (40) en direction de la zone de détection (DA).

9. Capteur de particules (10) selon l'une quelconque des revendications 1 à 7, dans lequel le trajet de guidage (40) est une pyramide tronquée configurée à partir d'au moins un jeu de surfaces de parois intérieures opposées (41) de façon que la distance entre le jeu de surfaces de parois intérieures (41) se rétrécisse depuis l'entrée (42) du trajet de guidage (40) en direction de la zone de détection (DA).

10. Capteur de particules (10) selon l'une quelconque des revendications 1 à 9, dans lequel les surfaces de parois intérieures (41) du trajet de guidage (40) sont incurvées.

11. Capteur de particules (10) selon l'une quelconque des revendications 1 à 9, dans lequel les surfaces de parois intérieures (41) du trajet de guidage (40) sont effilées.

12. Dispositif électronique comprenant :
un capteur de particules (10) selon l'une quelconque des revendications 1 à 11 ; et
une unité de sortie configurée pour délivrer en sortie le résultat du capteur de particules (10) détectant la présence ou la densité de particules.
